# EUROPÄISCHE PATENTSCHRIFT

(11) **EP 0 534 295 B1**
(45) Veröffentlichungstag und Bekanntmachung des Hinweises auf die Patenterteilung: **11.12.1996**
(21) Anmeldenummer: 92115800.2
(22) Anmeldetag: 16.09.1992
(51) Int. Cl.: C08G 18/48, C08G 18/66, C08G 18/76

(54) **Thermoplastische Polyurethan-Elastomere mit einem geringen organischen Kohlenstoffabgabewert, Verfahren zu ihrer Herstellung und ihre Verwendung**
Thermoplastic polyurethane elastomers with a low organic carbon emission value, process for their preparation and their use
Elastomères-polyuréthane thermoplastiques à une valeur d'émission de carbone organique réduite, procédé pour leurs préparations et leurs utilisations

(30) Priorität: 26.09.1991 DE 4132015
(43) Veröffentlichungstag der Anmeldung: 31.03.1993
(73) Patentinhaber: BASF Aktiengesellschaft, 67063 Ludwigshafen (DE)
(72) Erfinder: Groll, Peter, Dr., W-6737 Boehl-Iggelheim (DE); Straehle, Wolfgang, Dr., W-6900 Heidelberg (DE); Mueller, Herbert, Dr., W-6710 Frankenthal (DE)

(56) Entgegenhaltungen:
- EP-A- 0 202 487
- EP-A- 0 307 811
- EP-A- 0 421 268
- DE-A- 3 239 318
- BIOMATERIALS Bd. 9, Nr. 5, September 1988, GUILDFORD,SURREY, GREAT BRITAIN Seiten 383 - 392 , XP000000307 GRASEL ET AL 'EXTRACTION OF POLYURETHANE BLOCK COPOLYMERS: EFFECTS ON BULK AND SURFACE PROPERTIES AND BIOCOMPATIBILITY'

## Beschreibung

Gegenstände der Erfindung sind thermoplastische Polyurethan-Elastomere, im folgenden abgekürzt TPU genannt, die erhalten werden aus
a) 4,4'-Diphenylmethan-diisocyanat oder Diphenylmethan-diisocyanat-Isomerenmischungen,
b) Polyoxybutylen- und/oder Polyoxybutylen-polyoxyalkylenglykolen mit einem Molekulargewicht im Bereich von 150 bis 1 800 und einem Gehalt an cyclischen Ethern von maximal 0,06 Gew.-%, bezogen auf das Gesamtgewicht von (b), und
c) mindestens einem Kettenverlängerungsmittel aus der Gruppe der Alkandiole mit 2 bis 12 Kohlenstoffatomen, Diethylenglykol, Dipropylenglykol, der Terephthalsäure- bis -alkandiole mit 2 bis 4 Kohlenstottatomen im Alkandiolrest und der Hydroxyalkylether des Hydrochinons mit Molekulargewichten von 60 bis 400,
ein Verfahren zu ihrer Herstellung und ihre Verwendung zur Herstellung von Formkörpern und Folien für den medizinischen oder hygienischen Bereich oder den Lebensmittelsektor.

TPU sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819-825, Kautschuk, Gummi, Kunststoffe 35 (1982), Seiten 568-584, oder dem Kunststoff-Handbuch, Band 7, Polyurethane, 2. Auflage, herausgegeben von Dr. G. Oertel, Carl Hanser Verlag, München, Wien, 1983, gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A-1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130°C erhitzten Ofen geführt, bis es erstarrt. Das Reaktionsprodukt wird danach zerkleinert, bei Temperaturen bis 120°C 6 bis 40 Stunden getempert und kann so z.B. mit Spritzgußmaschinen zu Formkörpern verarbeitet werden.

Beim Extruderverfahren, das z.B. in der DE-A-20 59 570 (US-A-3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während die nach dem Bandverfahren ein opakes Aussehen aufweisen. Opake TPU können zu Folien verarbeitet werden, die kein Blocken zeigen, während transparente TPU ungeeignet sind.

Zur Vermeidung dieser Nachteile wird nach Angaben der DE-A-32 24 324 die Herstellung von TPU bei Temperaturen von 60 bis 250°C in zwei Reaktionsstufen durchgeführt, wobei man in der ersten Reaktionsstufe die Aufbaukomponenten kontinuierlich mischt, die Reaktionsmischung auf einen Träger aufbringt und bis zur Erstarrung bei der jeweiligen Reaktionstemperatur partiell reagieren läßt und danach in der zweiten Reaktionsstufe die nicht ausreagierte, erstarrte Reaktionsmischung aktionsmischung in einem Extruder aufschmilzt und die Reaktion zu Ende führt.

Nach diesem Verfahren hergestellte TPU besitzen verbesserte mechanische Eigenschaften und können entsprechend den nach dem Bandverfahren erhaltenen Produkte zu Polyurethan-Folien und -Formkörpern verarbeitet werden.

Zur Herstellung von TPU können die an sich bekannten Aufbaukomponenten, vorzugsweise difunktionellen Aufbaukomponenten, Verwendung finden. Beispielhaft genannt seien höhermolekulare Polyhydroxylverbindungen, die die sogenannte Weichphase bilden, z.B. Polyoxyalkylen-glykole, wie Polyoxypropylen-, Polyoxyethylen-, Polyoxypropylen-polyoxyethylen-, Polyoxybutylen-, Polyoxybutylen-polyoxyethylen- oder Polyoxybutylen-polyoxypropylen-glykole oder Polyesterdiole wie Alkandiol-polyadipate, aromatische oder aliphatische Diisocyanate wie 4,4'-Diphenylmethan-diisocyanat (MDI) oder 1,6-Hexamethylen-diisocyanat (HDI) und niedermolekulare Kettenverlängerungsmittel zur Bildung der Hartsegmente, z.B. Alkandiole oder Dialkylen-glykole wie 1,4-Butandiol oder Diethylenglykol.

Für die Verwendung von TPU zur Herstellung von Formkörpern oder Folien für den hygienischen oder medizinischen Bereich sowie im Lebensmittelsektor ist von entscheidender Bedeutung, daß die erhaltenen Formkörper oder Folien keine oder nur äußerst geringe Anteile von durch Wasser extrahierbare organische Verbindungen besitzen.

Für den Einsatz von Bedarfgegenständen aus Kunststoff zur Verwendung im Trinkwasserbereich existieren "Kunststoff-Trinkwasser-Empfehlungen" des deutschen Bundesgesundheitsamtes (BGA), die die Eignung des Bedarfsgegenstandes und die an ihn gestellten Anforderungen beschreiben (Bundesgesundheitsblatt Nr. 20, Januar 1977 und Nr. 22, Juni 1979). Als wichtige, dort aufgelistete Grundanforderung ist die organische Kohlenstoffabgabe, der sogenannte TOC-Wert, (total organic carbon) aufgeführt. Die Migration organischer Kohlenstoffverbindungen aus dem Kunststoff darf für eine spezielle Verwendung bei einer definierten Wasserlagerung einen festgelegten TOC-Grenzwert nicht überschreiten. Die Untersuchung dient demnach beispielsweise dazu, die aus dem betreffenden Kunststoffmaterial in Getränke auswandernden Anteile zu erfassen. In gleicher Weise ist auch im medizinischen Bereich die Migration organischer Kohlenstoffverbindungen aus dem Kunststoff unerwünscht.

Handelsübliche TPU, u.a. auch diejenigen gemäß DE-A-3239318, weisen unabhängig von der Art der verwendeten Einsatzstoffe, insbesondere der höhermolekularen Polyhydroxylverbindungen, gewöhnlich keine zufriedenstellenden TOC-Werte auf.

Für einen gezielten Einsatz im medizinischen oder hygienischen Bereich oder im Lebensmittelsektor ist TPU daher nicht, oder nur mit einem entsprechenden Vorbehalt geeignet.

Die Aufgabe der vorliegenden Erfindung bestand darin, TPU mit einem verbesserten Eigenschaftsspektrum, insbesondere TOC-Werte, die der Kunststoff-Trinkwasser-Empfehlung entsprechen, zur Herstellung von Formkörpern oder Folien für den Einsatz im medizinischen oder hygienischen Bereich oder im Lebensmittelsektor zur Verfügung zu stellen.

Überraschenderweise zeigte sich, daß durch die Verwendung von an cyclischen Ethern armen Polyoxybutylen- oder Polyoxybutylen-polyoxyalkylen-glykolen als höhermolekulare Polyhydroxylverbindungen zur Bildung der Weichphase im TPU der TOC-Wert des TPU deutlich gesenkt werden konnte.

Gegenstand der Erfindung sind somit TPU, die erhältlich sind durch Umsetzung von
a) 4,4'-Diphenylmethan-diisocyanat oder Diphenylmethan-diisocyanat-Isomerenmischungen mit
b) mindestens einem Polyoxybunylen-glykol, Polyoxybutylen-polyoxyalkylen-glykol oder einer Mischung aus Polyoxybutylen- und Polyoxybutylen-polyoxyalkylenglykol mit einem Molekulargewicht von 150 bis 1800, vorzugsweise von 250 bis 1 200 und
c) mindestens einem Kettenverlängerungsmittel aus der Gruppe der Alkandiole mit 2 bis 12 Kohlenstoffatomen, Diethylemglykol, Dipropylenglykol, der Terephthalsäure- bis -alkandiole mit 2 bis 4 Kohlenstoffatomen im Alkandiolrest und der Hydroxyalkylether des Hydrochinons mit Molekulargewichten von 60 bis 400
und dadurch gekennzeichnet sind, daß die hierzu verwendeten Polyoxybutylen- oder Polyoxybutylen-polyoxyalkylen-glykole (b) einen Gehalt an cyclischen Ethern von maximal 0,06 Gew.-%, vorzugsweise von kleiner als 0,035 Gew.-% und insbesondere gleich oder kleiner als 0,02 Gew.-%, bezogen auf das Gesamtgewicht (b) besitzen.

Gegenstände der Erfindung sind ferner ein Verfahren zur erstellung der TPU gemäß Anspruch 4 und die Verwendung der erfindungsgemäßen TPU zur Herstellung von Formkörpern oder Folien für den Einsatz im medizinischen oder hygienischen Bereich oder im Lebensmittelsektor.

Handelsübliche Polyoxybutylen- oder Polyoxybutylen-polyoxyalkylen-glykole enthalten herstellungsbedingt cyclische Ether, sogenannte Kronenenher der allgemeinen Formel (-CH₂CH₂CH₂CH₂O-)ₘ, wobei m eine Zahl von üblicherweise gleich oder größer als 2, vorzugsweise 3 bis 6 ist. Die Konzentration dieser Kronenether liegt je nach Herstellungsverfahren und Molekulargewicht in einem Bereich von 0,1 bis 1 Gew.-%, wobei durch spezielle Behandlungsmethoden der Polyoxybutylen- oder Polyoxybutylen-polyoxyalkylen-glykole ihr Gehalt auf Werte kleiner als 0,1 Gew.-%, vorzugsweise auf ungefähr null gesenkt werden kann.

Durch die Verwendung dieser kronenetherarmen oder vorzugsweise im wesentlichen kronenetherfreien Polyoxybutylenglykole oder Polyoxybutylen-polyoxyalkylen-glykole konnten nicht nur TPU mit sehr niedrigen TOC-Werten erhalten werden, sondern auch ihre Verarbeitbarkeit verbessert werden. Die mechanischen Eigenschaften der erfindungsgemäßen Produkte liegen in dem für Polyoxybutylen-glykol-TPU üblichen Bereich.

Kronenetherarme Polyoxybutylen- oder Polyoxybutylen-polyoxyalkylen-glykole bedingen somit eine starke Verringerung der Migration organischer Kohlenstoffverbindungen aus dem TPU bei der Lagerung in Wasser.

Die aus den erfindungsgemäßen TPU's hergestellten Formkörper und Folien eignen sich aufgrund der geringen TOC-Absolutwerte in besonderem Maße für einen Einsatz im medizinischen oder hygienischen Bereich oder im Lebensmittelsektor.

Die erfindungsgemäßen TPU werden hergestellt durch Umsetzung der Aufbaukomponenten (a) mit (b) und (c). Die Umsetzung kann in Gegenwart oder vorzugsweise in Abwesenheit von Katalysatoren (d) sowie von Hilfsmitteln und/oder Zusatzstoffen (e) durchgeführt werden.
a) als organische Diisocyanate (a) werden Gemische aus 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'Diphenylmethan-diisocyanate, Diphenylmethan-diisocyanat-Isomerengemische mit einem 4,4'-Diphenylmethan-diisocyanatgehalt von größer als 96 Gew.-% und insbesondere im wesentlichen reines 4,4'-Diphenylmethan-diisocyanat eingesetzt.
   Die organischen Diisocyanate können gegebenenfalls in untergeordneten Mengen, z.B. in Mengen bis zu 3 Mol.%, vorzugsweise bis zu Mol.%, bezogen auf das organische Diisocyanat, durch ein tri- oder höherfunktionelles Polyisocyanat ersetzt werden, wobei dessen Mengen jedoch so begrenzt werden muß, daß noch thermoplastische verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.
   Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
b) Als höhermolekulare Polyoxyalkylen-glykole (b) finden, wie bereits ausgeführt wurde, Polyoxybutylen-polyoxyalkylen-glykole, vorzugsweise Polyoxybutylenpolyoxypropylen-glykole, Polyoxybutylen-polyoxypropylen-polyoxyethylen-glykole oder Polyoxybutylenpolyoxyethylen-glykole und insbesondere Polyoxybutylen-glykole oder Mischungen aus mindestens 2 dieser Polyoxyalkylen-glykole mit einem mittleren Molekulargewicht Mn (Zahlenmittelwert) von 150 bis 1800 und vorzugsweise von 250 bis 1200 Verwendung, die erfindungsgemäß einen Gehalt an cyclischen Ethern der Formel (-CH₂CH₂CH₂CH₂O-)ₘ, in der m vorzugsweise eine Zahl von 3 bis 6 ist, von maximal 0,06 Gew.-%, vorzugsweise von kleiner als 0,035 Gew.-% und insbesondere gleich oder kleiner als 0,02 Gew.-%, bezogen auf das Gesamtgewicht (b) besitzen. Das Zahlenmittelmolekulargewicht Mn wird ermittelt, indem das Gewicht einer Probe durch die Anzahl der Moleküle, aus der sie sich zusammensetzt, geteilt wird.
   Polyoxybutylen- und Polyoxybutylen-polyoxyalkylen-glykole mit den erfindungsgemäß erforderlichen geringen Gehalten an cyclischen Ether können z.B. durch Nachbehandlung der nach bekannten Verfahren hergestellten Produkte erhalten werden. Hierzu werden diese z.B. einer Behandlung mit einem Gemisch auf Wasser und einem Kohlenwasserstoff unterworfen und die gereinigten Produkte nach der Phasentrennung aus der wäßrigen Phase isoliert. Geeignete Verfahren hierzu werden beispielsweise beschrieben in der EP-A-0 202 487 und EP-A-0 307 811.
c) Als Kettenverlängerungsmittel (c) kommen Alkandiole mit 2 bis 12 Kohlenstoffatomen, vorzugsweise mit 2, 4 oder 6 Kohlenstoffatomen, Diethylenglykol, Dipropylenglykol, Ethandiol, Hexandiol-1,6 und insbesondere Butandiol-1,4 in Betracht. Geeignet sind jedoch auch Diester der Terephthalsäure mit Alkandiolen mit 2 bis 4 Kohlenstoffatomen, wie z.B. Terephthalsäure-bis-ethylenglykol oder -butandiol-1,4 und Hydroxyalkylether des Hydrochinons mit Molekulargewichten von 60 bis 400, vorzugsweise 60 bis 300 wie z.B. 1,4-Di-(β-hydroxyethyl)-hydrochinon.
   Zur Herstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
   Zur Herstellung der TPU werden die Polyoxybutylen- und/oder Polyoxybutylen-polyoxyalkylen-glykole (b) und Diolen (c) vorteilhafterweise in Molverhältnissen von 1:1 bis 1:10, vorzugsweise von 1:2,5 bis 1:7 verwendet, so daß die resultierenden TPU's eine Härte von Shore 80A bis 74D besitzen.
d) Die erfindungsgemäßen TPU werden vorzugsweise katalysatorfrei hergestellt. Zur Beschleunigung der Reaktion zwischen den NCO-Gruppen der Diisocyanate (a) und den Hydroxylgruppen der Aufbaukomponenten (b) und (c) können jedoch die aus dem Stand der Technik bekannten und üblichen tertiären Amine, wie z.B. Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche Verwendung finden. Sofern Katalysatoren mitverwendet werden, werden diese üblicherweise in Mengen von 0,001 bis 0,1 Gew.-Teilen pro 100 Gew.-Teilen der Mischung aus Polyoxyalkylen-glykol (b) und Diolen (c) eingesetzt.
e) Neben Katalysatoren können den Aufbaukomponenten gegebenenfalls auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe.
   Als Füllstoffe seien genannt, z.B. organische Füllstoffe, wie z.B. Ruß und Melamin und anorganische Füllstoffe, wie z.B. Quarzmehl, Talkum, amorphe Kieselsäure oder Mischungen davon.
   Geeignete Oxidationsverzögerer und Wärmestabilisatoren sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.-%, bezogen auf das Gewicht des TPU, verwendet werden.
   Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.-%, bezogen auf das Gewicht des TPU, eingesetzt werden.
   Entformungsmittel, die in der Regel ebenfalls in Mengen bis zu 1 Gew.-%, bezogen auf das Gewicht des TPU zugesetzt werden, sind Stearinsäure, Stearylalkohol, Stearinsäureester und -amide sowie die Fettsäureester des Pentaerythrits.
   Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.
   Zu den anderen, nicht im einzelnen beschriebenen Hilfsmitteln oder Zusatzstoffen (e) können nähere Angaben der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Die Hilfsmittel und/oder Zusatzstoffe (e) können hierzu, in die Aufbaukomponenten oder in die Reaktionsmischung zur Herstellung der TPU eingebracht werden. Nach einer anderen Verfahrensvariante können die Hilfsmittel (e) und/oder Zusatzstoffe, jedoch mit dem TPU gemischt und anschließend verschmolzen werden.

Zur Herstellung der TPU werden die Aufbaukomponenten (a), (b) und (c) gegebenenfalls in Gegenwart von Katalysatoren (d) und gegebenenfalls Hilfsmitteln und/oder Zusatzstoffen (e)in solchen Mengen zur Reaktion gebracht, daß das Åquivalenzverhältnis von NCO-Gruppen der Diisocyanate zur Summe der Hydroxylgruppen der Komponenten (b) und (c) 0,80 bis 1,20:1, vorzugsweise 0,95 bis 1,05:1 und insbesondere ungefähr 1:1 beträgt.

Die erfindungsgemäßen TPU, können hergestellt werden nach dem Extruder- oder vorzugsweise Bandverfahren durch batchweises oder kontinuierliches Mischen der Aufbaukomponenten (a) bis (c) sowie gegebenenfalls (d) und/oder (e), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU. Gegebenenfalls kann es zweckmäßig sein das erhaltene TPU vor der Weiterverarbeitung zu den erfindungsgemäßen TPU-Formmassen bei 80 bis 120°C, vorzugsweise 100 bis 110°C über einen Zeitraum von 1 bis 24 Stunden zu tempern.

Die TPU werden, wie bereits ausgeführt wurde, bevorzugt nach dem Bandverfahren hergestellt. Hierzu werden die Aufbaukomponenten (a) bis (c) und gegebenenfalls (d) und/oder (e) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.-%, vorzugsweise von 0,1 bis 0,5 Gew.-% liegen, werden TPU mit einer relativ niedrigen Schmelzviskosität bzw. einem hohen Schmelzindex erhalten.

Die erhaltenen TPU können z.B. in Form von Granulaten gelagert oder direkt nach bekannten Methoden, z.B. durch Spritzgießen oder Extrusion, zu Formkörper oder Folien verarbeitet werden.

Die Formkörper und Folien eignen sich insbesondere für den Einsatz im medizinischen oder hygienischen Bereich z.B. als Katheter, Infusionsbeutel, Schläuche, Babyeinlagen und Babywindeln, und im Lebensmittelsektor als Trinkbecher, Verpackungsmaterial und Rohrleitungen z.B. für Getränke aller Art.

### Beispiel 1

1 500 g eines kronenetherfreien Polyoxybutylen-glykols mit einem Molekulargewicht von 1 000 wurden bei 110°C und 5 mbar 1 Stunde entgast. Danach wurden 187,5 g Butandiol-1,4 unter Rühren hinzugefügt und die klare Lösung auf 70°C erwärmt. Unter intensivem Rühren (1 000 Umdrehungen/Minute) wurden der Lösung eine der NCO-Kennzahl 101,5 entsprechende Menge (909,5 g), auf 65°C erwärmtes 4,4'-MDI hinzugegeben.

Bei Erreichen der Reaktionstemperatur von 120°C wurde die homogene Reaktionsmischung auf eine mit teflonisiertem Glasfasergewebe ausgekleidete Heizplatte mit den Abmessungen 550 x 380 mm gegossen. Nach ca. 2 Minuten wurde das heiße Roh-TPU zerkleinert und danach 15 Stunden bei 100°C im Trockenschrank getempert. Danach wurde das TPU mit einer Schnittmühle in ein Granulat der Körnung 4 bis 6 mm übergeführt und dieses mit einer Schneckenspritzgießmaschine zu Prüfkörpern in Form von Rundscheiben mit einem Durchmesser von 60 mm und einer Dicke von 2 mm verarbeitet.

### Beispiel 2

Man verfuhr analog den Angaben des Beispiels 1, verwendete jedoch ein Polyoxybutylen-glykol mit einem Kronenethergehalt von 0,05 Gew.-%.

### Vergleichsbeispiel I bis V

Analog den Angaben von Beispiel 1 wurden TPU mit der NCO-Kennzahl 101,5 unter Verwendung folgender handelsüblicher Polyoxybutylen-glykole hergestellt:

| Vgl. Bsp. | Handelsprodukt | Molekulargewicht | Kronenethergehalt¹⁾ [Gew.-%] |
|---|---|---|---|
| I | Poly THF 1000 (BASF AG) | 1 000 | 0,1 |
| II | Poly THF 2000 (BASF AG) | 2 000 | 0,15 |
| III | Terathane® 1000 (Du Pont) | 1 000 | 0,48 |
| IV | Terathane® 2000 (Du Pont) | 2 000 | 0,55 |
| V | Polymeg® 1000 (Quaker Oats) | 100 | 0,38 |

| | | | |
|---|---|---|---|
| ¹⁾ nach der gaschromatographischen (GC) Analyse | | | |

1) nach der gaschromatographischen (GC) Analyse

Bestimmung der organischen Kohlenstoffabgabe nach der Arbeitsvorschrift in Bundesgesundheitsblatt 20/22 (1977/1979)
- TOC =: total organic carbon
- DOC =: dissolved organic carbon
TOC-Bestimmung aus DOC-Messungen

### Prüfkörper:

3 TPU-Rundscheiben (60 mm x 2 mm) pro Messung
- Gesamtoberfläche 182 cm²

### Vorbereitungen:

- Ausschwenken aller Glasgeräte mit Chromschwefelsäure
- Spülen der Glasgeräte mit vollentsalztem (VE) Wasser
- 3-tägige Lagerung der Glasgeräte in VE-Wasser
- Berührungsfreie Positionierung der Prüfkörper im Präparateglas (1000 ml)
- Vollständige blasenfreie Benetzung der Prüfkörper mit VE-Wasser (182 ml)
- Nullprobe
- Doppelbestimmungen

### Meßperioden:

1. Messung nach 3 Tagen → Prüfwasser erneuern
2. Messung nach weiteren 3 Tagen → Prüfwasser erneuern
3. Messung nach weiteren 3 Tagen

### DOC-Messung:

- Gerät:: Fa. MAIHAK

### Meßverfahren:

In das Reaktionsgefäß mit schwefelsaurem Wasser wird das Prüfwasser zudosiert und zunächst der anorganische Kohlenstoff (Carbonat) in Form von Kohlendioxid ausgetrieben.

Der Aufschluß der organischen Verbindungen erfolgt schließlich im Sauerstoff-Strom unter Bestrahlung mit einer Hg-Niederdrucklampe (254 nm). Erneut gebildetes Kohlendioxid wird detektiert.

### Detektor:

### Nichtdisperser Infrarot-Detektor (NDIR), auf Kohlendioxid justiert (4250 nm)

### Vergleichslösung:

### Kaliumhydrogenphthalatlösung (nach BGA-Empfehlung: Oxalsäurelösung)

### Ergebnisse der TOC-Untersuchungen

| TPU hergestellt nach | TOC-Wert [mg/m² x Tag] | | |
|---|---|---|---|
| | nach 3 Tagen | nach 6 Tagen | nach 9 Tagen |
| Beispiel 1 | 30,9 | 15,6 | 13,4 |
| Beispiel 2 | 32,4 | 20,6 | 14,2 |
| Vgl. Bsp. | | | |
| I | 40,7 | 26,9 | 19,9 |
| II | 46,0 | 42,7 | 26,5 |
| III | 80,9 | 50,4 | 39,3 |
| IV | 127,7 | 96,0 | 69,4 |
| V | 62,5 | 42,1 | 33,5 |

Für die Verwendung im medizinischen oder hygienischen Bereich oder im Lebensmittelsektor kommen im Sinne der Erfindung insbesondere solche TPU in Betracht, die nach einem Kontaktversuch von 3 Tagen, der zweimal zu wiederholen ist, einen TOC-Wert von gleich oder kleiner als 15 mg/m² x Tag besitzen. Für die Beurteilung maßgeblich sind die TOC-Werte des letzten Kontaktversuchs.

An den nach Beispiel 1 und den Vergleichsbeispielen III und V hergestellten TPU wurden folgende mechanische Eigenschaften gemessen:

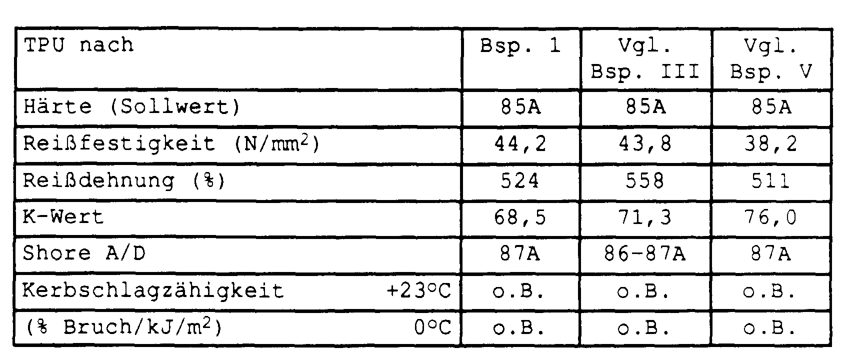

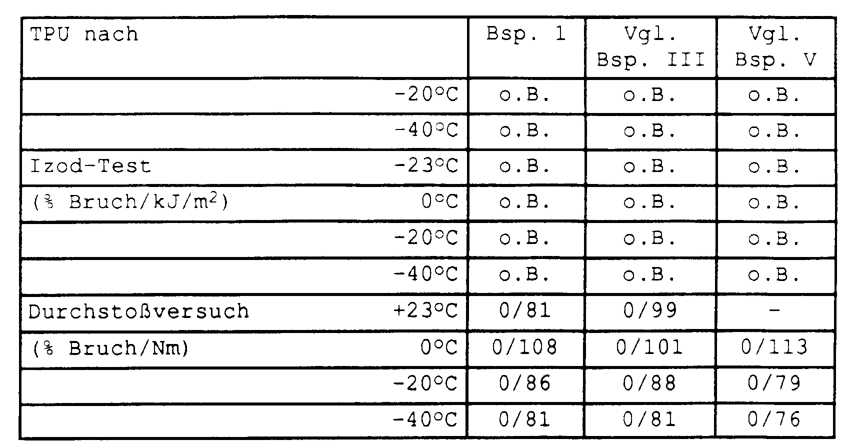

Die Meßergebnisse zeigen, daß die hergestellten TPU, unabhängig vom Kronenethergehalt der verwendeten Polyoxybutylen-glykole, im wesentlichen gleiche mechanische Eigenschaften aufweisen.

## Patentansprüche

1. Thermoplastische Polyurethan-Elastomere, erhältlich durch Umsetzung von
a) 4,4'-Diphenylmethan-diisocyanat oder Diphenylmethan-diisocyanat-Isomerenmischungen mit
b) Polyoxybutylen-glykolen, Polyoxybutylen-polyoxyalkylen-glykolen oder Mischungen davon mit einem Molekulargewicht im Bereich von 150 bis 1 800 und
c) mindestens einem Kettenverlängerungsmittel aus der Gruppe der Alkandiole mit 2 bis 12 Kohlenszoffatomen, Diethylenglykol, Dipropylenglykol, der Terephthalsäure- bis -alkandiole mit 2 bis 4 Kohlenstoffatomen im Alkandiolrest und der Hydroxy-alkylether des Hydrochinons mit Molekulargewichten von 60 bis 400
dadurch gekennzeichnet, daß die Polyoxybutylen - oder polyoxybutylen-polyoxyalkylen-glykole (b) einer Gehalt an cyclischen Ethern von axial 0,06 Gew.-%, bezogen auf das Gesamtgewicht, besitzen.

2. Thermoplastische Polyurethan-Elastomere, erhältlich durch Umsetzung von
a) 4,4'-Diphenylmethan-diisocyanat mit
b) mindestens einem Polyoxybutylen-glykol, einem Polyoxybutylen-polyoxyalkylen-glykol oder einer Mischung dieser Polyoxyalkylen-glykole mit einem. Molekulargewicht im Bereich von 150 bis 1 800 und einem Gehalt an cyclischen Ethern von maximal 0,06 Gew.-%, bezogen auf das Gesamtgewicht, und
c) 1,4-Butandiol.

3. Thermoplastische Polyurethan-Elastomere mach Anspruch 1 oder 2, dadurch gekennzeuchnet, daß die cyclischen Ether die Formel
(-CH₂CH₂CH₂CH₂O-)ₘ
besitzen, in der m eine Zahl von 3 bis 6 ist.

4. Verfahren zur Herstellung von thermoplastiscnen Polyurethan-Elastomeren durch Umsetzung von
a) 4,4'-Diphenylmethan-diisocyanat oder Diphenylmethan-diisocyanat-Isomerenmishungen mit
b) Polyoxybutylen-glykolen, Polyoxybutylen-polyoxyalkylen-glykolen oder Mischungen davon mit einem Molekulargewicht Im Bereich von 150 bis 1 800 und
c) mindestens einem Kettenverlängerungsmittel aus der Gruppe der Alkandiole mit 2 bis 12 Kohlenstoffatomen, Diethylenglykol, Dipropylenglykol, der Terephthalsäure- bis -alkandiole mit= 2 bis 4 Kohlenstoffatomen im Alkandiolrest und der Hydroxyalkylether des Hydrochinons mit Molekulargewichten von 60 bis 400
in Gegenwart von
d) gegebenenfalls Katalysatoren und
e) gegebenenfalls Hilfsmitteln und/oder Zusatzstoffen
dadurch gekennzeichnet, daß die Polyoxybutylen-glykole oder Polyoxybutylen-polyoxyalkylen-glykole (b) einen Gehalt an cyclischen Ethern von maximal 0,06 Gew.-%, bezogen auf das Gesamtgewicht, besitzen.

5. Verfahren und Anspruch 4, dadurch gekennzeichnet, daß man die thermoplastischen Polyurethan nach dem Extruder- oder vorzugsweise Bandverfahren erstellt.

6. Verfahren nach Anspruch 4, dadurch gekennzeichnet, daß man als organische Polyisocyanate (a) 4,4'-Diphenylmethan-diisocyanaz verwendet.

7. Verfahren nach Anspruch 4, dadurchn gekennzeichnet, daß das Polyoxybuzylen-glykol (b) ein Molekulargewicht von 250 bis 1 200 und einen Gehalt an cyclischen Ethern der Formel (-CH₂CH₂CH₂CH₂O-)ₘ, in der m eine Zahl von 3 bis 6 ist, von maximal 0,035 Gew.-%, bezogen auf das Gesamtgewicht, besitzt.

8. Verfahren nach Anspruch 4, dadurch gekennzeichnet, daß das Kettenverlängerungsmittel (c) 1,4-Butandiol ist.

9. Verwendung der thermoplastischen Polylurethan-Elastomeren, erhältlich durch Umsetzung von
a) 4,4'-Diphenylmethan-diisocyanat oder Diphenylmethan-diisocyanat-Isomerenmischungen mit
b) Polyoxybutylen-glykolen, Polyoxybutylen-polyoxyalkylen-glykolen oder Mischungen davon mit einem Molekulargewicht im Bereich von 150 bis 1 800 und einem Gehalt an cyclischen Ethern von maximal 0,06 Gew.-%, bezogen auf das Gesamtgewicht, und
c) mindestens einem Kettenverlängerungsmittel aus der Gruppe der Alkandiole mit 2 bis 12 Kohlenstoffatomen, Diethylenglykol, Dipropylenglykol, der Terephthalsäure- bis -alkandiole mit 2 bis 4 Kohlenstoffatomen im Alkandiolrest und der Hydroxyalkylether des Hydrochinons mit Molekulargewichten von 60 bis 400,
zur Herstellung von Formkörpern oder Folien für den Einsatz im medizinischen oder hygienischen Bereich oder im Lebensmittelsektor.

10. Verwendung der thermoplastischen Polyurethan-Elastomeren, erhältlich durch umsetzung von
a) 4,4'-Diphenylmethan-diisocyanat mit
b) Polyoxybutylen-glykolen mit einem Molekulargewicht von 150 bis 1 800 und einem Gehalt an cyclischen Ethern, von maximal 0,06 Gew.-%, bezogen auf das Gesamtgewicht und
c) 1,4-Butandiol
zur Herstellung von Formkörpern oder Folien für den Einsatz im medizinischen oder hygienischen Bereich oder im Lebensmittelsektor.

## Claims

1. A thermoplastic polyurethane elastomer obtainable by reaction of
a) 4,4'-diisocyanatodiphenylmethane or mixtures of diisocyanatodiphenylmethane isomers with
b) polyoxybutylene glycols, polyoxybutylene/polyoxyalkylene glycols or mixtures thereof with a molecular weight in the range from 150 to 1800 and
c) at least one chain extender from the group of the alkanediols with 2 to 12 carbons, diethylene glycol, dipropylene glycol, of the terephthalic acid bis-alkanediols with 2 to 4 carbons in the alkanediol residue and of the hydroxyalkyl ethers of hydroquinone with molecular weights of from 60 to 400
wherein the polyoxybutylene or polyoxybutylene/polyoxyalkylene glycols (b) have a content of cyclic ethers not exceeding 0.06% of the total weight.

2. A thermoplastic polyurethane elastomer obtainable by reaction of
a) 4,4'-diisocyanatodiphenylmethane with
b) at least one polyoxybutylene glycol, one polyoxybutylene/polyoxyalkylene glycol or a mixture of these polyoxyalkylene glycols with a molecular weight in the range from 150 to 1800 and a content of cyclic ethers not exceeding 0.06% of the total weight, and
c) 1,4-butanediol.

3. A thermoplastic polyurethane elastomer as claimed in claim 1 or 2, wherein the cyclic ethers have the formula
(-CH₂CH₂CH₂CH₂O-)ₘ
where m is from 3 to 6.

4. A process for preparing thermoplastic polyurethane elastomers by reaction of
a) 4,4'-diisocyanatodiphenylmethane or mixtures of diisocyanatodiphenylmethane isomers with
b) polyoxybutylene glycols, polyoxybutylene/polyoxyalkylene glycols or mixtures thereof with a molecular weight in the range from 150 to 1800 and
c) at least one chain extender from the group of the alkanediols with 2 to 12 carbons, diethylene glycol, dipropylene glycol, of the terephthalic acid bis-alkanediols with 2 to 4 carbons in the alkanediol residue and of the hydroxyalkyl ethers of hydroquinone with molecular weights of from 60 to 400
in the presence or absence of
d) catalysts and
e) aids and/or additives
wherein the polyoxybutylene glycols or polyoxybutylene/ polyoxyalkylene glycols (b) have a content of cyclic ethers not exceeding 0.06% of the total weight.

5. A process as claimed in claim 4, wherein the thermoplastic polyurethanes are prepared by extrusion or, preferably, by the belt process.

6. A process as claimed in claim 4, wherein 4,4'-diisocyanatodiphenylmethane is used as organic polyisocyanates (a).

7. A process as claimed in claim 4, wherein the polyoxybutylene glycol (b) has a molecular weight of from 250 to 1200 and a content of cyclic ethers of the formula (-CH₂CH₂CH₂CH₂O-)ₘ, where m is from 3 to 6, not exceeding 0.035% of the total weight.

8. A process as claimed in claim 4, wherein the chain extender (c) is 1,4-butanediol.

9. The use of the thermoplastic polyurethane elastomers obtainable by reaction of
a) 4,4'-diisocyanatodiphenylmethane or mixtures of diisocyanatodiphenylmethane isomers with
b) polyoxybutylene glycols, polyoxybutylene/polyoxyalkylene glycols or mixtures thereof with a molecular weight in the range from 150 to 1800 and a content of cyclic ethers not exceeding 0.06% of the total weight, and
c) at least one chain extender from the group of the alkanediols with 2 to 12 carbons, diethylene glycol, dipropylene glycol, of the terephthalic acid bis-alkanediols with 2 to 4 carbons in the alkanediol residue and of the hydroxyalkyl ethers of hydroquinone with molecular weights of from 60 to 400,
for the production of molded articles or sheets for use in the medical or hygiene sector or in the foodstuffs sector.

10. The use of the thermoplastic polyurethane elastomers obtainable by reaction of
a) 4,4'-diisocyanatodiphenylmethane with
b) polyoxybutylene glycols with a molecular weight in the range from 150 to 1800 and a content of cyclic ethers not exceeding 0.06% of the total weight, and
c) 1,4-butanediol.
for the production of molded articles or sheets for use in the medical or hygiene sector or in the foodstuffs sector.

## Revendications

1. Elastomères de polyuréthanne thermoplastiques, obtenus par réaction de
a) diisocyanate de 4,4'-diphénylméthane ou de mélanges d'isomères de diisocyanate de diphénylméthane avec
b) des polyoxybutylèneglycols, des polyoxybutylènepolyoxyalkylèneglycols ou des mélanges de ceux-ci ayant un poids moléculaire compris entre 150 et 1800, et
c) au moins un agent d'allongement de chaîne, du groupe comprenant les alcanediols à 2-12 atomes de carbone, le diéthylèneglycol, le dipropylèneglycol, les téréphtalates de bis-alcanediol à 2-4 atomes de carbone dans le reste alcanediol et les éthers hydroxyalkyliques de l'hydroquinone ayant des poids moléculaires de 60 à 400,
caractérisés en ce que les polyoxybutylèneglycols ou polyoxybutylène-polyoxyalkylèneglycols (b) ont une teneur en éthers cycliques de 0,06% en poids au maximum, par rapport au poids total.

2. Elastomères de polyuréthanne thermoplastiques, obtenus par réaction de
a) diisocyanate de 4,4'-diphénylméthane avec
b) au moins un polyoxybutylèneglycol, un polyoxybutylène-polyoxyalkylèneglycol ou un mélange de ces polyoxyalkylèneglycols ayant un poids moléculaire compris entre 150 et 1800 et une teneur en éthers cycliques de 0,06% en poids au maximum, par rapport au poids total, et
c) du 1,4-butanediol.

3. Elastomères de polyuréthanne thermoplastiques selon la revendication 1 ou 2, caractérisés en ce que les éthers cycliques répondent à la formule
(-CH₂CH₂CH₂CH₂O-)ₘ
dans laquelle m est un nombre de 3 à 6.

4. Procédé de préparation d'élastomères de polyuréthanne thermoplastiques par réaction de
a) diisocyanate de 4,4'-diphénylméthane ou de mélanges d'isomères de diisocyanate de diphénylméthane avec
b) des polyoxybutylèneglycols, des polyoxybutylènepolyoxyalkylèneglycols ou des mélanges de ceux-ci ayant un poids moléculaire compris entre 150 et 1800, et
c) au moins un agent d'allongement de chaîne, du groupe comprenant les alcanediols à 2-12 atomes de carbone, le diéthylèneglycol, le dipropylèneglycol, les téréphtalates de bis-alcanediol à 2-4 atomes de carbone dans le reste alcanediol et les éthers hydroxyalkyliques de l'hydroquinone ayant des poids moléculaires de 60 à 400,
en présence éventuelle
d) de catalyseurs et
e) d'adjuvants et/ou d'additifs,
caractérisé en ce que les polyoxybutylèneglycols ou polyoxybutylène-polyoxyalkylèneglycols (b) ont une teneur en éthers cycliques de 0,06% en poids au maximum, par rapport au poids total.

5. Procédé selon la revendication 4, caractérisé en ce que l'on prépare les polyuréthannes thermoplastiques par le procédé en extrudeuse ou, de préférence, sur bande.

6. Procédé selon la revendication 4, caractérisé en ce que l'on utilise, comme polyisocyanate organique (a), du diisocyanate de 4,4'-diphénylméthane.

7. Procédé selon la revendication 4, caractérisé en ce que le polyoxybutylèneglycol (b) a un poids moléculaire de 250 à 1200 et une teneur en éthers cycliques de formule (-CH₂CH₂CH₂CH₂O-)ₘ (dans laquelle m est un nombre de 3 à 6) de 0,035% en poids au maximum, par rapport au poids total.

8. Procédé selon la revendication 4, caractérisé en ce que l'agent d'allongement de chaîne (c) est le 1,4-butanediol.

9. Utilisation des élastomères de polyuréthanne thermoplastiques, obtenus par réaction de
a) diisocyanate de 4,4'-diphénylméthane ou de mélanges d'isomères de diisocyanate de diphénylméthane avec
b) des polyoxybutylèneglycols, des polyoxybutylène-polyoxyalkylèneglycols ou des mélanges de ceux-ci ayant un poids moléculaire compris entre 150 et 1800, et une teneur en éthers cycliques de 0,06% en poids au maximum, par rapport au poids total, et
c) au moins un agent d'allongement de chaîne, du groupe comprenant les alcanediols à 2-12 atomes de carbone, le diéthylèneglycol, le dipropyléneglycol, les téréphtalates de bis-alcanediol à 2-4 atomes de carbone dans le reste alcanediol et les éthers hydroxyalkyliques de l'hydroquinone ayant des poids moléculaires de 60 à 400,
pour la fabrication de corps moulés ou de feuilles destinés à être utilisés dans le domaine médical ou hygiénique ou dans le secteur alimentaire.

10. Utilisation des élastomères de polyuréthanne thermoplastiques, obtenus par réaction de
a) diisocyanate de 4,4'-diphénylméthane avec
b) des polyoxybutylèneglycols ayant un poids moléculaire compris entre 150 et 1800 et une teneur en éthers cycliques de 0,06% en poids au maximum, par rapport au poids total, et
c) du 1,4-butanediol,
pour la fabrication de corps moulés ou de feuilles destinés à être utilisés dans le domaine médical ou hygiénique ou dans le secteur alimentaire.
